# EUROPÄISCHE PATENTSCHRIFT

(11) **EP 1 199 251 B1**
(45) Veröffentlichungstag und Bekanntmachung des Hinweises auf die Patenterteilung: **03.03.2004**
(21) Anmeldenummer: 01124861.4
(22) Anmeldetag: 18.10.2001
(51) Int. Cl.: B65B 33/04, B29C 51/16, B29C 51/42, B29C 63/00

(54) **Verfahren zum automatisierten Überziehen eines Formkörpers mit einer Folie und Verwendung derartiger Formkörper**
Method for automatically coating a moulded body with a foil as well as the use of such bodies
Procédé pour recouvrir automatiquement un corps moulé avec un film ainsi que l' usage de tels corps

(30) Priorität: 18.10.2000 DE 10051800
(43) Veröffentlichungstag der Anmeldung: 24.04.2002
(73) Patentinhaber: Chemetall GmbH, 60487 Frankfurt (DE)
(72) Erfinder: Rehm, Joseph, 63322 Rödermark (DE)
(74) Vertreter: Scherzberg, Andreas, Dr.

(56) Entgegenhaltungen:
- WO-A-99/50048
- DE-A- 3 128 977
- DE-A- 19 809 515
- US-A- 4 863 667

## Beschreibung

Die Erfindung betrifft ein Verfahren zum automatisierten Überziehen eines Formkörpers mit einer Folie sowie die Verwendung des Verfahrens.

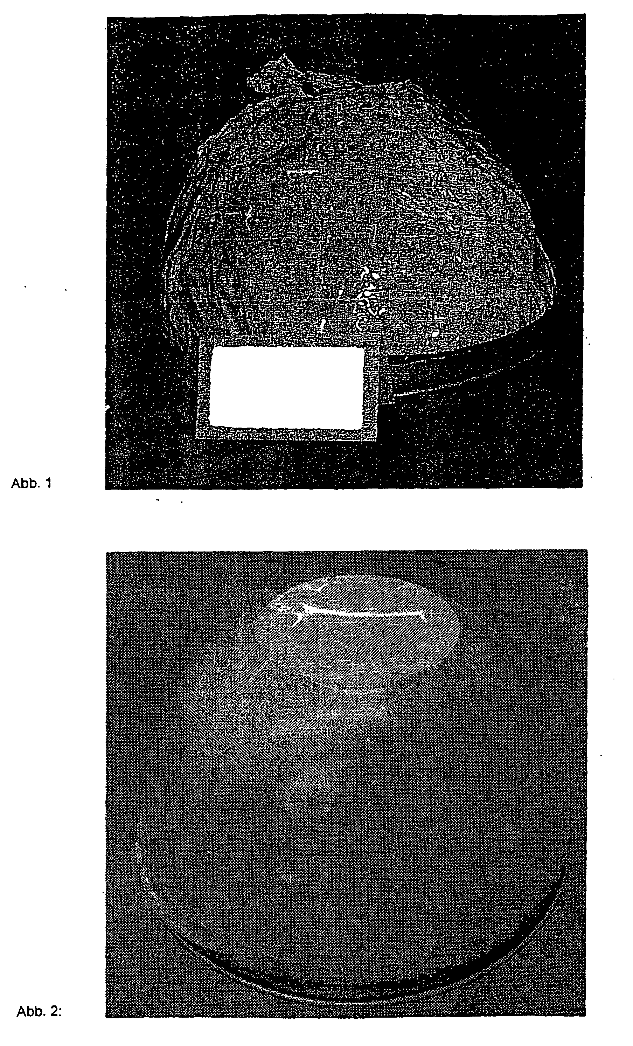

Überzugsfolien, insbesondere Transportschutzfolien oder Folien zum Schützen, Verkleiden oder/und Verschönem des überzogenen Formkörpers oder eines Teils davon, werden in weitem Ausmaß eingesetzt, um empfindliche, schutzbedürftige oder/und verschönerbare Formkörper oder Teile davon mit einer Folie zu überziehen. Hierzu gehören auch Werbefolien auf Karosserieflächen oder anderen Formkörpern. Ganz allgemein können Industrie- und Haushaltsfolien aus polymeren Materialien übergezogen, aufgeklebt oder/und aufgeschrumpft werden. Wie bei den im Haushalt verwendeten Folien ist es auch bei industriell eingesetzten Folien problematisch, in Handarbeit faltenfreie Folienüberzüge über regelmäßig oder unregelmäßig geformten bzw. gewölbten Formkörpern zu erzielen (siehe Abb. 1). Diese Probleme sind für die automatische Serienfertigung mindestens genau so groß und bisher ungelöst. Beim Überziehen von Teilen der Fahrzeugkarosserie mit der planen Folie entstehen Falten, die anschließend mittels Anpreßrollen weder entfernt, noch hundertprozentig geschlossen werden können.

Lacke oder ähnliche Überzugsmittel, die für die Beschichtung von Fahrzeugkarosserien verwendet werden, sind innerhalb der ersten Wochen nach dem Aufbringen auf die Substrate empfindlich gegen äußere Einflüsse wie z.B. Regenwasser mit darin enthaltenen Bestandteilen wie z.B. Säuren, Schienenabrieb und Staub, wie in der Luft enthaltenen Verunreinigungen wie Rauch, wie Kraftstoff, wie fliegenden Steinchen und wie Vogelkot sowie gegen mechanische Einflüsse wie z.B. Verkratzen.

Aus diesem Grund werden Transportschutzfolien von den Automobilherstellern auf die Karosserien aufgetragen, die umweltfreundlich sind und auf einfache Weise und z.B. beim Fahrzeugendabnehmer von der Karosserie rückstandsfrei entfernt werden können. Bewährt haben sich u.a. Polyolefinfolien, die mit Haftklebstoffen beschichtet sind. Bei der Applikation der planen Folienabschnitte auf die regelmäßig oder unregelmäßig geformten bzw. gewölbten Flächen von Karosserieteilen sind bei der Beschichtung Falten nur unter erheblichen Aufwendungen zu vermeiden.

Falten stellen ein permanentes Risiko der Beschädigung des zu schützenden Fahrzeuglackes dar. Aufgrund der Rückstellkraft von Falten, die sich auf gewölbten Flächen befinden, kann Feuchtigkeit, Schmutz und Luft unter die Falte dringen. Feuchtigkeit, insbesondere in Verbindung mit Verschmutzungen, führt leicht zu Schäden am Lack.

Falten können sich aufgrund der Rückstellkraft der Folie öffnen und aufstellen und so zur Ablösung der Folie führen. Zur Vermeidung dieser Erscheinungen werden die Folienkanten heute oft schon mit einem zusätzlichen glatten Folienstreifen gesichert, was einen deutlichen Mehraufwand bedeutet.

Wind kann in die Falten eindringen und die Folie partiell ablösen. Anhaftender Flugstaub kann dann Verkratzungen und Beschädigungen an der Lackoberfläche verursachen. Im Extremfall kann die ganze Folie durch Wind bzw. Gegenwind beim Transport von der zu schützenden Fahrzeugfläche abgetragen werden.

Im industriellen Bereich sind heute Folien im Einsatz, die nach zwei verschiedenen Verfahren aufgebracht werden können:
1.) Durch Überziehen eines Formkörpers mit einer Folie, die eine Klebstoffschicht trägt, vielfach in manuellen Verfahren, wenn höhere Qualitätsansprüche angelegt werden.
2.) Schrumpffolien lassen sich mittels einer Schrumpfhaube auf dem zu überziehenden Formkörper aufbringen. Die hierbei verwendeten planen, insbesondere thermoplastischen, Schrumpffolien lassen sich jedoch auf gekrümmten Formkörpem nicht ohne weiteres faltenfrei aufbringen. Die Schrumpffolie liegt jedoch in weiten Bereichen nicht dicht an und soll häufig Luftpolster einschließen.

Die Folien lassen sich bisher bei allen Verfahrensvarianten nach Kenntnis der Anmelderin nicht auf regelmäßig oder unregelmäßig geformten bzw. gekrümmten Formkörpern ausreichend faltenfrei aufbringen. Die Faltenfreiheit läßt sich bisher nur in aufwendiger Handarbeit z.B. beim Überziehen der lackierten Teile einer Karosserie erreichen. In einem Automobilwerk sind daher zum Überziehen der Karosserieteile von Personenkraftwagen mit Transportschutzfolien bei einem einzigen Kleinwagen bis zu 30 Werker im Einsatz, um diese Folie innerhalb von etwa einer Minute überzuziehen. Außerdem kann die von Hand ausgeführte Arbeit nicht auf ein gleichmäßig hohes Qualitätsniveau in der Serie ausgerichtet werden. Dies ist mit erheblichen Personalkosten verbunden. Es besteht daher seit vielen Jahren das Bedürfnis, gekrümmte Teile einer Karosserie mit einer Folie in einem automatisierten Verfahren faltenfrei überziehen zu können.

Transportschutzfolien werden daher heute üblicherweise von Hand auf die Fahrzeugkarosserien aufgetragen. Mit den bisher bekannten Automaten und automatischen Verfahren ist keine faltenfreie Applikation der an sich planen Folie auf die Teile der gewölbten Fahrzeugkarosserie möglich.

EP-A2-0 519 278 beschreibt Transportschutzfolien, die für das Überziehen von Formkörpem in der Automobilindustrie von Hand gut geeignet sein können, die aber z.B. auf gekrümmten Formkörpern nicht faltenfrei aufgebracht werden können.

Gattungsgemässe Verfahren zum Überziehen von Formkörpern mit Folie sind mehrfach beschrieben worden.

Gemäss US -A- 4 863 667 wird eine vorgeformte Folie insgesamt erwärmt und mittels Vakuum in Vertiefungen des zu beschichtenden Formkörpers gezogen.

DE -A-198 09 515 schlägt vor, die Folie mit beheizten Schneidwerkzeugen an problematischen Stellen zu perforieren.

Schliesslich beschreibt die WO -A- 99/50048 das Ausrakeln von beim Überziehen entstanden Falten mittels einer Wärmequelle.

Aufgabe der Erfindung ist es, die Nachteile des Standes der Technik zu überwinden und insbesondere ein Verfahren zum automatisierten Überziehen von Formkörpern mit einer Folie vorzuschlagen, das auch bei stark gekrümmten oder kompliziert geformten Formkörpern in der Serienfertigung faltenfreie, gut schützende und kostengünstige Folienüberzüge ermöglicht.

Vor allem die besonders hochwertigen Transportschutzfolien für den Automobilbau machen es erforderlich, daß ein solches Verfahren entwickelt wird, weil dort eine relativ große Foliendicke auch der stark gedehnten Folienpartien wegen der damit verbundenen, proportional auftretenden Zugfestigkeit notwendig ist.

Die Aufgabe wird gelöst mit einem automatisierten Verfahren zum faltenfreien oder weitestgehend faltenfreien Überziehen von regelmäßig oder unregelmäßig geformten bzw. gekrümmten Formkörpern mit einer Folie, insbesondere zum Überziehen von Teilen von Karosserien oder als Verpackungen mit einer Transportschutzfolie, das dadurch gekennzeichnet ist, daß die Folie vor oder/und während des Überziehens des Formkörpers mit einem Folienabschnitt in mindestens einer Partie, die stärker verformt wird als die benachbarten Partien, selektiv erwärmt wird und daß die Partien der Folie um die Halterungen der Folie nicht oder geringer als in der stärker zu verformenden Partie erwärmt werden, so daß die verschiedenen Partien der Folie während des Verformens eine unterschiedliche Temperatur aufweisen.

Die Aufgabe wird weiterhin gelöst mit einem automatisierten Verfahren zum faltenfreien oder weitestgehend faltenfreien Überziehen von regelmäßig oder unregelmäßig geformten bzw. gekrümmten Formkörpern mit einer Folie, insbesondere zum Überziehen von Teilen von Karosserien oder als Verpackungen mit einer Transportschutzfolie, das dadurch gekennzeichnet ist, daß die Folie vor oder/und während des Überziehens des Formkörpers mit einem Folienabschnitt in Partien um die Halterungen der Folie selektiv gekühlt wird und daß die Folie in mindestens einer Partie, die stärker verformt wird als die benachbarten Partien, nicht oder weniger gekühlt wird als in Partien um die Halterungen, so daß die verschiedenen Partien der Folie während des Verformens eine unterschiedliche Temperatur aufweisen.

Das Verfahren ist dadurch gekennzeichnet, daß die zu applizierende, üblicherweise gänzlich oder weitgehend plane, ggf. abgewinkelt gehaltene oder/und gekrümmt gehaltene Folie selektiv entsprechend der partiell unterschiedlich starken Verformung erwärmt bzw. abgekühlt wird, um einen etwas vergleichmäßigten Verlauf der Foliendehnung zwischen stark und schwach oder zwischen stark und im wesentlichen nicht zu dehnenden Partien der Folie zu erreichen, so daß beim Überziehen keine Falten entstehen. Versuche mit verschiedenen marktüblichen Folien haben gezeigt, daß viele der heute marktüblichen Folien für die jeweiligen Verfahrensparameter des erfindungsgemäßen Verfahrens ungeeignet sind. Beispielsweise reißen viele Folien beim Stretchen als Teil des Überziehens, also bei einer linearen Dehnung von z.B. nur etwa 200 % oder 400 % der ursprünglichen Länge in nur einer Richtung, weil die Zugfestigkeit dieser Folien viel zu gering ist.

Andererseits ergeben sich häufig Probleme bei der Halterung der Folie. Die Zugklammern, mit denen die Folienabschnitte am Rand gehalten werden können, können beim Überziehen der Karosserieteile mit diesem Folienabschnitt in der Partie um die Klammern derart dehnen, daß eine automatische Applikation unmöglich wird. Auch der Einsatz von Vakuum-Saugnäpfen, die über die Fläche der Folie verteilt wurden, um die Kräfte besser auffangen zu können, brachte keine Lösung des Problems.

Bei dem erfindungsgemäßen Verfahren kann der zu beschichtende Formkörper oder mindestens ein Teil davon die unterschiedlichsten Oberflächen aufweisen. Es können auch unterschiedliche Oberflächen gleichzeitig nebeneinander mit einem einzigen Folienabschnitt beschichtet werden. Vorzugsweise besteht die Oberfläche des mindestens einen zu beschichtenden Formkörpers aus mindestens einem Material auf Basis Lack, Kunstharz, Polymer, Korrosionsschutzmaterial, Kunststoff, Holz oder/und Metall. Bei einem Korrosionsschutzmaterial kann es sich insbesondere um eine Passivierungs-, Vorbehandlungs- oder Behandlungsschicht handeln, vorzugsweise auf Basis Chromat oder/und Phosphat. Bei metallischen Oberflächen kann es sich insbesondere handeln um Oberflächen aus Aluminium, Stahl bzw. Edelstahl oder um Oberflächen aus einer Aluminium, Eisen, Kupfer, Magnesium, Nickel, Titan, Zink oder/und Zinn enthaltenden Legierung. Vorzugsweise wird unbeschichtetes umgeformtes Blech, korrosionsschutzbeschichtetes umgeformtes Blech, lackiertes umgeformtes Blech oder entsprechende ähnliche Formkörper mit einer Folie überzogen. In gleicher Weise können entsprechende Holz- oder Kunststoff-Formteile überzogen werden.

Die jeweiligen Oberflächen können entsprechend ihrer Herstellung sehr unterschiedlich beschaffen sein; vorzugsweise sind sie so, wie das entsprechende Material hergestellt oder aufgebracht wurde mit ihrer "natürlichen" Oberfläche versehen, ggf. auch geätzt, angelöst, gefräst, geläppt, geschliffen, poliert oder/und oberflächlich thermisch behandelt. Insbesondere handelt es sich um lackierte oder ähnlich mit Kunstharz oder/und Polymer beschichtete Formkörper, um verzinkte metallische Formkörper oder um massive Formkörper z.B. aus Kunststoff oder einer Legierung, insbesondere Stahl, einer Magnesium- oder Aluminiumlegierung. Vor allem bei Karosserieteilen kann es sich um lackierte Teile handeln, die partiell wegen ihrer unzureichenden Oberflächenqualität geschliffen wurden, so daß eine der unter dem Lack liegenden Schichten, insbesondere eine Vorbehandlungsschicht, eine Verzinkungsschicht oder sogar die Oberfläche des massiven metallischen Formkörpers, bis an die nach der mechanischen Bearbeitung aufgebrachte Lackschicht hervortreten kann.

Die aufzubringende Folie kann in ihren Eigenschaften grundsätzlich in weiten Grenzen variieren. Um jedoch auf regelmäßig oder unregelmäßig geformten bzw. gekrümmten Formkörpern faltenfrei aufgebracht werden zu können, um für die geplante Dauer der Beschichtung von meist wenigen Tagen oder Wochen, bis diese Beschichtung wieder entfernt wird, oder für die Lebensdauer des beschichteten Formkörpers zu halten, um ggf. vor Korrosion zu schützen und um ggf. einwandfrei und leicht entfernt werden zu können, muß die Folie oft eine spezifische Eigenschaftskombination aufweisen.

Üblicherweise weist die aufzubringende Folie eine hohe Witterungsbeständigkeit, eine hohe Dichtigkeit, eine hohe chemische, physikalische und strukturelle Homogenität, eine gleichmäßige Dicke, eine lineare Dehnung gemessen nach ASTM D882 von mindestens 300 %, insbesondere in allen Richtungen der Folienebene, vorzugsweise von mindestens 450 %, besonders bevorzugt von mindestens 550 %, insbesondere mit einer Dehnung in mindestens einer Richtung von mindestens 700 %, eine Zugfestigkeit gemessen nach ASTM D882 in Längsrichtung von mindestens 4 N pro 25 mm des Teststreifens, vorzugsweise von mindestens 6 N pro 25 mm, besonders bevorzugt von mindestens 7 N pro 25 mm, eine hohe Kratzfestigkeit, eine Schälfestigkeit auf Edelstahl #4 gemessen nach PSTC 2 mit einem 90° Abziehwinkel von mindestens 1,0 N pro 25 mm Breite des Teststreifens, vorzugsweise von mindestens 1,5 N pro 25 mm Breite, besonders bevorzugt von mindestens 2 N pro 25 mm Breite, ganz besonders bevorzugt von mindestens 2,5 N pro 25 mm Breite, eine hohe chemische Resistenz, eine hohe Lichtbeständigkeit, mindestens eine glatte oder mikrostrukturierte Oberfläche, ggf. einen partiellen oder ganzflächigen Auftrag einer Klebstoffschicht und ggf. - wenn keine Klebstoffschicht die Haftung auf dem zu beschichtenden Formkörper bewirken soll - eine ausreichende Haftung auf der ausgewählten zu beschichtenden Oberfläche auf. Ferner soll sie schmutzabweisend sein.

Die Folie ist üblicherweise polymerer organischer Natur und kann vorzugsweise eine Folie auf Basis von Polyolefinen sein, insbesondere auf Basis von Polyethylen oder/und Polypropylen. Die polymere organische Folie kann ihrerseits ein- oder zweiseitig jeweils partiell oder ganzflächig mit einer dünnen Schicht z.B. eines Schutzstoffes, Dekorationsstoffes oder/und einer Druckfarbe beschichtet sein. Sie kann auch in sich gefärbt sein oder/und mit einer spezifischen Struktur wie z.B. für den Lotusblatteffekt versehen sein.

Für die Beklebung von Fahrzeugkarosserien werden vorzugsweise Polyolefin-Folien, insbesondere solche mit einer Dicke im Bereich von 40 bis 150 µm - gemessen im ungedehnten Zustand - verwendet. Diese Dicke ermöglicht bei einer Zugfestigkeit von mindestens 5 N pro 25 mm und bei einer Schälfestigkeit von mindestens 1,2 N pro 25 mm bei Raumtemperatur ein Abziehen der Folie von der Karosserie, ohne daß die Folie hierbei durchreißt. Bewährt haben sich in den Versuchen sogenannte Autowrap-Folien, die längs und quer zur Abrollrichtung eine Reißdehnung von mindestens 400 % besitzen, vorzugsweise solche mit einer Reißdehnung in der Größenordnung von ca. 600 %.

Grundsätzlich kann die Dicke der Folie vor der Dehnung beim Überziehen auf dem zu beschichtenden Formkörper im Bereich von 1 bis 200 µm liegen, meistens im Bereich von 10 bis 160 µm, oft im Bereich von 25 bis 120 µm, in vielen Fällen bevorzugt im Bereich von 40 bis 100 oder bis 80 µm. Der ausgewählte Dickenbereich der Folie wird jedoch wesentlich von den spezifischen Eigenschaften wie z.B. den mechanischen Eigenschaften der Folie, den eingesetzten Temperaturen, den angewandten Dehnungen und den Funktionen der Folie bestimmt werden.

Je nach dem Verformungsgrad kann die Foliendicke so gewählt werden, daß nach der Verformung die Foliendicke von z.B. 40 µm nicht unterschritten wird.

Besonders in den Randzonen ist die Dehnung gering, so daß die auf der Folie befindliche Klebstoffdicke von ursprünglich z.B. 10 µm nach der Verformung eine Dicke von 5 µm, vorzugsweise von 7 µm, nicht unterschreitet. Diese Klebstoffdicke ist ausreichend, damit die Unebenheiten der Lackoberfläche (z.B. Orangenhaut) gegen Flüssigkeitsunterwanderung abgedichtet ist. Bei einer starken Verformung mit einer Dehnung der Folie von z.B. 200 % kann die Klebstoffdicke auf ca. 4 bis 6 µm abnehmen. Diese starke Verformung wird üblicherweise nicht an der Folienkante erreicht und ist somit nicht von Bedeutung, da der Klebstoff in dieser Partie nicht dem Zugriff von Flüssigkeit und Wind ausgesetzt ist.

Die in der Automobilindustrie als Transportschutzfolie genutzten Folien müssen in der Regel sehr hohe Anforderungen erfüllen: U.a. müssen die Folien einen sechsmonatigen sog. Florida-Test bezüglich Witterungsbeständigkeit, UV-Lichtbeständigkeit und Alterungsbeständigkeit erfolgreich durchstehen.

Eine ausreichende Haftung auf einer Lackoberfläche oder auch auf einer beliebigen anderen Oberfläche des zu beschichtenden Formkörpers kann u.U. bereits schon mit einer Folie ohne eine Klebstoffbeschichtung aufgrund der elektrostatischen Anziehung erreicht werden. Oft wird eine ausreichende Haftung jedoch auf der üblicherweise unebenen Oberfläche, insbesondere Lackoberfläche mit Orangenhaut, erst dadurch erreicht, daß die Folie mit einer Klebstoffschicht versehen ist. Die Klebstoffschicht soll helfen, den Randspalt zwischen dem beklebten Formkörper und der Folie im wesentlichen oder gänzlich abzudichten. Vorzugsweise wird ein Polyisobutylen enthaltender Klebstoff eingesetzt. Die Klebstoffschicht kann eine beliebige Dicke aufweisen und hat die Aufgaben, eine ausreichende Haftung zu erzeugen und unebene Partien der Oberfläche abzudichten. Die Dicke der Klebstoffschicht kann vor dem Dehnen der Folie insbesondere im Bereich von 1 bis 80 µm liegen, vorzugsweise im Bereich von 2 bis 40 µm, besonders bevorzugt im Bereich von 3 bis 30 µm, vor allem zwischen 5 und 15 µm. Die Klebkraft läßt sich als Schälfestigkeit gemessen nach PSTC 2 #4 Edelstahl 90 ° Abziehwinkel angeben. Die Schälfestigkeit der Klebstoffschicht beträgt vorzugsweise mindestens 0,5 N pro 25 mm Breite des Teststreifens, besonders bevorzugt mindestens 1 N pro 25 mm, ganz besonders bevorzugt mindestens 1,5 N pro 25 mm, insbesondere mindestens 2 N pro 25 mm.

Üblicherweise wird bei dem erfindungsgemäßen Verfahren eine plane Folie von einer Rolle - z.B. mit einem Dispenser - abgewickelt und in geeigneter Länge abgeschnitten. Der Folienabschnitt kann dann einer Applikationsanlage zugeführt werden. Die Applikationsanlage kann u.a. mindestens eine Halterung für die Folie vor dem Abschneiden oder für den Folienabschnitt nach dem Abschneiden aufweisen. Im folgenden wird nicht in jedem Fall zwischen Folie und Folienabschnitt wegen der sprachlichen Vereinfachung unterschieden und wird daher öfter nur einer dieser Begriffe angewandt.

Weiterhin kann die Applikationsanlage mindestens eine Spanneinrichtung zum ebenen oder/und gekrümmten Halten, Handhaben oder/und Bewegen der Folie bzw. des Folienabschnitts aufweisen, vorzugsweise mindestens einen Rahmen. In der Spanneinrichtung soll die Folie meistens nur mit begrenzter Kraft und Dehnung gehalten werden. Die in der Folie wirkenden Kräfte sollen dabei möglichst gleichmäßig verteilt werden. Wenn beim Kontaktieren und Überziehen des zu beschichtenden Formkörpers höhere Kräfte auf die Folie einwirken, sollen diese Kräfte auch möglichst gleichmäßig und in einer gewissen Partie der Folie verteilt werden. Außerdem kann die Spanneinrichtung Heiz- bzw. Kühlelemente aufweisen, die ggf. selektiv ausgerichtet werden können oder/und selektiv z.B. bezüglich Richtung, Strahl- oder Stromstärke, Streuwinkel, Energie- oder Luftmenge eingestellt werden können; vorzugsweise sind dies Infrarotstrahler, Kühlmitteldüsen oder/und Warmluftdüsen.

Der Folienabschnitt ist hierbei in geeigneter Weise zu halten und wird hierfür in einer Spanneinrichtung gehalten, vorzugsweise in einem Rahmen, z.B., um mittels dieser Hilfsvorrichtung durch Absenken des Rahmens ein Karosseriedach mit einer Schutzfolie zu beschichten. Die Befestigung kann dabei u.a. über die punktförmige oder lineare Einspannung, Klemmung, Verklebung oder Verschweißung in bzw. mit Elementen der Spanneinrichtung wie z.B. durchgehenden oder partiellen Führungen, Schienen oder ähnlichen Elementen, oder über Zugklammern oder ähnliche Halterungen, durch gerichteten Gasstrahl oder über Saugvorrichtungen erfolgen.

Eine Spanneinrichtung kann beispielsweise ein dreidimensionales Stützgerüst enthalten, bei dem zumindest die Ecken eines rechteckigen Folienabschnitts eingespannt werden. Sie kann so gestaltet werden, daß hierbei kein in einer Ebene liegender Rahmen gebildet wird, damit andere Einrichtungen bzw. Mitarbeiter auch beim Bewegen und insbesondere Absenken der Spanneinrichtung neben der Folie leichter Zugang finden. Ein ebener Rahmen kann z.B. im wesentlichen aus etwa 2 cm starkem Polypropylen-Rundmaterial bestehen. Mit einer Spanneinrichtung kann die Folie z.B. von oben nach unten über die Karosserieteile ausgebreitet, gespannt, über die ganze zu beschichtende Fläche gezogen, über dem Formkörper zumindest teilweise gedehnt (=Stretchen) und ggf. aufgeklebt werden.

Die für die Weiterleitung und das Überziehen mit der Folie im Produktionsprozeß genutzten Bewegungen des zu beschichtenden Formkörpers, des Folienabschnitts bzw. von Teilen der Applikationsanlage oder/und der ganzen Applikationsanlage mit dem Folienabschnitt sind grundsätzlich wie die erforderlichen Konstruktionselemente der Applikationsanlage bekannt.

Bei der Beschichtung von z.B. Motorhaube, Dach und Heckdeckel kann mit dem gleichen spezifischen Applikationswerkzeug und dem gleichen Folienabschnitt das Überziehen vorgenommen werden. Es ist lediglich die partielle Verformung entsprechend den Verformungslängen zu berücksichtigen.

Entsprechend dem erforderlichen Verformungsgrad wird der Folienabschnitt in mindestens einer Partie erwärmt und gleichzeitig oder/und unmittelbar anschließend durch Zuführen, insbesondere Absenken, der Applikationsvorrichtung oder/und des zu beschichtenden Formkörpers auf und über den zu beschichtenden Formkörper oder eines Teils davon mit dem Folienabschnitt faltenfrei aufgetragen, wobei der Folienabschnitt üblicherweise überall über die Ränder des zu beschichtenden Formkörpers übersteht. Die überstehenden Ränder sind vorzugsweise mindestens 5 mm breit, um eine ausreichende Befestigung zu ermöglichen.

Der Vorteil dieses Verfahrens besteht darin, daß die Folie an den Angriffsflächen der Halterungen eine niedrigere Temperatur als in der Partie der starken Verformung besitzen kann und daß die Folie in der Partie der Halterungen eine hohe Zugfestigkeit aufweisen kann, so daß auch eine hohe Zugkraft dort keinen Schaden anrichten kann.

In den Partien, in denen besonders starke Verformungen gewünscht werden und keine Falten entstehen sollen, wird entsprechend dem Verformungsgrad eine höhere Temperatur eingestellt und damit die Zugfestigkeit noch weiter verringert, was ein faltenfreies Überziehen mit der Folie ermöglicht.

Bei dem erfindungsgemäßen Verfahren kann die Temperatur der Folie in den verschiedenen Partien des Folienabschnitts näherungsweise proportional zu der Verformung eingestellt werden. Die Wahl der jeweiligen Temperatur der Folienpartien ist abhängig von der Zugfestigkeit der Folie in Abhängigkeit von der Temperatur und wird entsprechend der Zunahme der Verformungslänge erhöht. Die Verformungslänge der Folie ist analog der Verformungslänge der zu überziehenden Formkörper, z.B. verformten Karosserieblechen, und kann ggf. aus den Daten, die beim Ziehen der Karosseriebleche im Presswerk anfallen, übernommen werden.

Für die selektive Erwärmung können grundsätzlich alle geeigneten Verfahren und Hilfsmittel eingesetzt werden, insbesondere Infrarot-, Mikrowellen-, widerstandsbeheizte Elemente bzw. Düsen von warmem Fluid, insbesondere Warmluftdüsen. Die Temperatur des warmen Gases, insbesondere der warmen Luft, sollte im Bereich von 30 bis 120 °C, vorzugsweise im Bereich von 40 bis 80 °C betragen, je nach dem Fluiddurchsatz und der Verteilung über die Folienoberfläche. Solche oder ähnliche Heizelemente können derart über die zu applizierende Folienfläche verteilt werden, daß nur an den stark zu verformenden Partien selektiv eine Erwärmung oder eine stärkere Erwärmung als in der weniger zu verformenden Partie vorgenommen wird. Die Temperaturunterschiede zwischen den stärker zu verformenden Partien zu den Partien besonders niedriger Temperatur der Folie - soweit es solche gibt, sonst zu den übrigen Partien niedriger Temperatur, können je nach dem Verformungsgrad zwischen etwa 3 °C bis zu etwa 100 °C, vorzugsweise 5 bis 80 °C, besonders bevorzugt 10 bis 60 °C, ganz besonders bevorzugt 15 bis 45 °C betragen.

Anstelle der selektiven Erwärmung kann grundsätzlich auch eine selektive Abkühlung gewählt werden, die die benötigten Temperturunterschiede zwischen den stärker und den weniger stark bzw. nicht zu verformenden Partien der Folie ermöglicht. Demgemäß empfiehlt es sich, vor allem die Partien um die Halterungen zu kühlen. Für eine Abkühlung stehen die grundsätzlich bekannten Möglichkeiten zur Verfügung, u.a. ein kühlendes Gebläse. Es können auch gekühlte Spanneinrichtungen oder/und gekühlte Halterungen benutzt werden. Der gewünschte Effekt kann auch mit einer Kombination der selektiven Kühlung und der selektiven Erwärmung erzielt werden.

Hierbei ist es förderlich, wenn die Spanneinrichtung auf den zu beschichtenden Formkörper oder/und umgekehrt zubewegt wird und ggf. ein gewisses Stück sogar übergestülpt wird, z.B. bis der gesamte zu beschichtende Bereich des Formkörpers beschichtet ist.

Die Applikationsvorrichtung kann auch mindestens ein bewegtes Mittel wie z.B. eine Rolle, eine Walze, eine Bürste, ein Schaumstoffelement, ein schwammartiges Element, einen Stempel, ein Kissen insbesondere aus filzartigem Material, ein Fluid, Pulver oder/und Granulat enthaltendes Kissen, ein flexibles oder formtreues Heiz- oder/und Kühlelement, wobei das formtreue bewegte Mittel im wesentlichen oder genau die negative Form zu der mit Folie beschichteten Formkörperoberfläche aufweist, oder ein ähnliches Element zum Andrücken auf die zu beschichtende Oberfläche, ein Rakel oder eine ähnliche Quetschvorrichtung oder Düsen zum Andruck der Folie z.B. mit Luftdruck an die Oberfläche des zu beschichtenden Formkörpers, insbesondere im Bereich von Vertiefungen. Hiermit kann die Folie auf dem Formkörper weitestgehend formschlüssig angedrückt werden.

Besonders bevorzugt sind bewegte Mittel, die flexibel oder formtreu sind und gleichzeitig dem Heizen oder/und Kühlen dienen können, wobei das formtreue bewegte Mittel im wesentlichen oder genau die negative Form zu der mit Folie beschichteten Formkörperoberfläche aufweist, wie z.B. eine Matte, ein Filz, ein Gewebe, ein Kissen oder eine flexible Platte. Diese Mittel bestehen vorzugsweise aus Wärme gut leitenden Substanzen und können zusätzlich ggf. als Wärmespeicher wirken. Bevorzugt sind daher metallische Werkstoffe und Wärmespeicher wie z.B. Braunstein. Bei dem bewegten Mittel kann es sich insbesondere um eine zum Heizen oder/und Kühlen eingerichtete Matte, um eine ggf. Metall, Legierung oder/und mindestens eine andere, Wärme leitende Substanz enthaltende Matte, in der ggf. Heizleiter eingelassen sind, oder um ein entsprechendes Gewebe mit Heiz- oder/und Kühlelementen, um ein heiz- oder/und kühlbares Kissen, das ggf. ein Fluid enthält, das ständig vorhanden sein kann oder durch das Kissen, Kanäle und eine Versorgungseinheit, die ggf. zum Kühlen oder Heizen des Fluids eingerichtet ist, zirkulieren kann, oder um ein bewegtes Mittel handeln, das ein Fluid, ein Pulver, ein Granulat oder/und ähnliche Füllelemente, die untereinander beweglich sind und ggf. der Wärmeleitung oder/und der Wärmespeicherung dienen können, enthält, insbesondere um ein Flüssigkeit enthaltendes Kissen handeln. Vorzugsweise weist das bewegte Mittel ein Gewicht pro Flächeneinheit auf, das ausreicht, um die gespannte Folie weitgehend oder gänzlich in Vertiefungen zu drücken und zumindest teilweise zum Anliegen an der Oberfläche des zu beschichtenden Formkörpers zu bringen und die Folie für die benötigte Zeit in dieser Lage zu halten.

Mit dem mindestens einen bewegten Mittel oder/und mit mindestens einem zur Spanneinrichtung gehörenden Heiz- oder Kühlelement kann die Folie zumindest teilweise, vorzugsweise weitgehend bis vollständig, in Vertiefungen bzw. tiefere Partien des zu beschichtenden Formkörpers gedrückt bzw. zumindest teilweise, vorzugsweise weitgehend oder vollständig, auf der Oberfläche des Formkörpers angelegt werden oder/und über erhabene Partien des zu beschichtenden Formkörpers gespannt und zumindest teilweise, vorzugsweise weitgehend oder vollständig, auf der Oberfläche des Formkörpers angelegt werden. Dies erfolgt bevorzugt, bevor die Folie in Partien mit größerer Zugspannung stärker erwärmt wird und bevor dadurch die größeren Zugspannungen in der Folie abgebaut werden. Stärker erwärmt bzw. stärker gekühlt bedeutet dabei eine Temperaturdifferenz von mindestens 5 °C.

Die hierbei auftretenden Kräfte, die erforderlich sind, um die Folie in Vertiefungen bzw. tiefere Partien des zu beschichtenden Formkörpers zu drücken bzw. zumindest teilweise auf der Oberfläche des Formkörpers anzulegen oder/und über erhabene Partien des zu beschichtenden Formkörpers zu spannen und zumindest teilweise auf der Oberfläche des Formkörpers anzulegen, beträgt mindestens 2 kg/m² Folienfläche bezogen auf die mit Kraft beaufschlagten Partien. Vorzugsweise beträgt die Kraft 5 bis 400 kg/m², besonders bevorzugt 10 bis 200 kg/m², oft mindestens 20 kg/m² bzw. bis zu 100 kg/m². Die Kraft kann dabei mechanisch über mindestens ein bewegtes Mittel wie z.B. über eine Matte oder ein Kissen, über den Druck eines Fluids z.B. in einem Kissen oder/und über den Strahl einer frei auf die Folie strahlenden Düse z.B. mit Luftdruck ausgeübt werden. Die Kraft dient bzw. die entsprechenden Mittel dienen dazu, die Folie weitgehend oder gänzlich der Form des zu beschichtenden Formkörpers anzupassen und die Folie weitgehend oder gänzlich an dessen Oberfläche anzulegen. Die Kraft bzw. die entsprechenden Mittel sollen die Folie möglichst glatt und faltenfrei spannen und zumindest in mindestens einer Partie stärker strecken und so lange in dieser Lage halten, bis durch die Erwärmung bzw. Abkühlung der erwärmten bzw. abgekühlten Partien eine Verringerung der starken Zugspannungen eintritt.

Besonders bevorzugt ist es, die Folie mindestens auf 10 % der mit der Folie zu schützenden Fläche anzulegen oder/und fast aufliegend zu überspannen, wobei die Folie vorteilhafterweise erst mit einem bewegten Mittel gespannt bzw. angedrückt wird, bevor die Folie in bestimmten Partien aufgewärmt oder gekühlt wird, insbesondere stärker aufgewärmt oder stärker gekühlt wird.

Besonders bevorzugt ist auch ein Verfahren, bei dem die Folie zumindest teilweise in Vertiefungen bzw. tiefere Partien - z.B. abgesenkte Partien der Motorhaube neben dem Kotflügel - des zu beschichtenden Formkörpers gedrückt bzw. zumindest teilweise auf der Oberfläche des Formkörpers angelegt wird oder/und über erhabene Partien des zu beschichtenden Formkörpers gespannt und zumindest teilweise auf der Oberfläche des Formkörpers angelegt wird, bevor die Folie in Partien mit größerer Dehnung, wo eine größere Zugspannung auftritt, erwärmt wird und bevor dadurch die größeren Zugspannungen in der Folie abgebaut werden.

Falls erforderlich, kann die Folie alternativ auch mit Gasdruck bzw. Luftdruck angedrückt werden. Das Andrücken kann insbesondere bei konkaven Vertiefungen eines ansonsten im wesentlichen konvex geformten Formkörpers vorteilhaft sein, um die Folie weiter oder gänzlich an die zu beschichtende Oberfläche anzudrücken.

Falls die Folie nicht gänzlich in die Vertiefung gedrückt werden sollte, ist es vorteilhaft, vor dem Überziehen des großflächigen Folienabschnitts einen spezifisch zugeschnittenen kleinen Folienabschnitt im Bereich der Vertiefung anzubringen, dessen Ränder mit den Partien des großen Folienabschnitts gut zusammen haften oder sogar verklebt werden; hierbei kann es hilfreich sein, den großen Folienabschnitt so aufzuschneiden, daß die Folie gänzlich in den Bereich der Vertiefung gedrückt werden kann. Das Aufschneiden kann von Hand oder automatisiert mit grundsätzlich bekannten Mitteln, insbesondere mit Thermomessern, konventionellen Messern oder mit einem Laserstrahl erfolgen. Ein Andrücken der Folie kann aber auch für die Verbesserung der Haftung und Abdichtung vorteilhaft sein. Dennoch ist es besonders bevorzugt, auch in solchen Fällen das Verfahren so erfindungsgemäß abzuändern, daß das Aufschneiden des großen Folienabschnitts und das Unterlegen mit einem zusätzlichen kleinen Folienabschnitt im Bereich einer Vertiefung vermieden werden kann.

Die Folienpartie, die nach dem Überziehen der zu beschichtenden Formkörper über die Ränder des zu beschichtenden Formkörpers übersteht und an dem Halterungen bzw. die Spanneinrichtung angreifen, wird nach dem Überziehen der Folie von Hand oder automatisiert z.B. mittels Laserstrahl, Abreißhaken, Perforationsmessern, Thermomessem, Zackenmessem oder konventionellen Messern abgeschnitten, so daß lediglich die faltenfreie, verformte Folienpartie auf dem zu beschichtenden Formkörper aufgetragen wird.

In vielen Fällen ist es besonders vorteilhaft, wenn der auf dem zu beschichtenden Formkörper aufgebrachte Folienabschnitt entsprechend seiner Zugfestigkeit und entsprechend der Haftung auf dem Untergrund in einem Stück abgezogen werden kann. Je reißfester (= zugfester) hierbei die Folie ist, desto dünner kann die Folie grundsätzlich ausgewählt werden. Zum Entfernen des Folienabschnitts von dem Formkörper ist es förderlich, ein Klebeband auf dem Folienabschnitt anzubringen, das auf dem Folienabschnitt stärker haftet als der Folienabschnitt auf der Oberfläche des beschichteten Formkörpers; dies kann insbesondere beim Entfernen des Folienabschnitts bei tieferen Temperaturen von Bedeutung sein.

In vielen Fällen ist es erforderlich, daß die Folie eine Mindestzugfestigkeit in Längsrichtung von 4 N pro 25 mm Breite des Teststreifens gemessen nach ASTM D882 aufweist, was bei vielen besonders hochwertigen Folien eine Dicke von mindestens 35 µm erfordert. Jedoch sollte die Folie meistens so ausgewählt werden, daß sie auch noch eine gewisse Steifigkeit aufweist, was ihre Handhabung erleichtert, weshalb sie auch eine gewisse Dicke aufweisen muß. Meistens sind Folien im Dickenbereich ab 30 oder ab 40 oder ab 50 µm Dicke gut zu handhaben. Alle Dickenangaben sind jeweils ohne die Dicke einer ggf. zusätzlich auftretenden Klebstoffschicht. Falls die Folie jedoch eine größere Ausgangsdicke aufweisen sollte, z.B. ab 70 µm oder ab 100 µm Dicke, kann in bestimmten Fällen die in Falten wirkende Rückstellkraft größer sein als die Haftfestigkeit, was leicht zu Problemen beim Überziehen mit der Folie führen kann. Andererseits sind die dickeren Folien meistens auch kratzfester, also weniger anfällig gegen Beschädigungen.

Hierbei wird es als besonders bevorzugt angesehen, wenn ein Folienabschnitt nach Alterung in dem sogenannten Florida-Test noch rißfrei und in einem Stück von der Formkörperoberfläche abgezogen werden kann. Bei dem Florida-Test werden die mit mindestens einem Folienabschnitt beschichteten Formkörper oder/und die "frische" Folie in Pompano Beach, Florida, USA, im Freien mit einem Auslegewinkel von 5 ° mit der mit Folie beschichteten Oberseite des Formkörpers bzw. ohne auf den Formkörper gespannt bzw. geklebt zu sein mit der Rückseite der Folie nach oben der Sonne entgegen über 6 Monate der Freibewitterung sowie zeitweilig dabei der Bestrahlung mit Sonnenlicht bzw. UV-Licht ausgesetzt. Nach diesem Test weist die Folie vorzugsweise immer noch eine Mindestzugfestigkeit in Längsrichtung von 5 N pro 25 mm Breite des Teststreifens gemessen nach ASTM D882 auf. Der Folienabschnitt des mit einer Folie überzogenen Formkörpers läßt sich nach diesem Test vorzugsweise immer noch rißfrei und in einem Stück von einem Formkörper wie z.B. einer Motorhaube abziehen.

Überraschend wurde gefunden, daß eine Folie, die in Längs- und Querrichtung eine Zugfestigkeit von nicht mehr als 25 % Unterschied, vorzugsweise von nicht mehr als 15 % Unterschied, insbesondere nicht mehr als 10 % Unterschied, vor allem eine nahezu gleich gute Zugfestigkeit hat, hierfür besser als eine Folie, die in Längs- und Querrichtung starke Unterschiede der Zugfestigkeit und ggf. auch anderer physikalischer Eigenschaften aufweist, eingesetzt werden kann.

Weiterhin wurde überraschend gefunden, daß es zum Vermeiden der Überdehnung der Folie in den Partien der Befestigungsmittel wie z.B. Zugklammem wichtig ist, daß die Temperatur der Partien der Folie um die Zugklammem niedriger ist als in der mindestens einen Partie, in der die Folie stark verformt und somit stark gedehnt werden soll. Aus diesem Grund ist eine höhere Temperatur in Partien der starken Verformung der Folie einzustellen.

Ferner war es überraschend, daß mit einer derartig einfachen Verfahrensvariante durch das Anpassen der Temperaturen an die Zugspannungen der verschiedenen Folienpartien faltenfreie Überzüge hergestellt werden konnten.

Unter der Voraussetzung, daß die aufzubringenden Folienabschnitte an den Randzonen nicht gedehnt werden, verändern sich weder die Folienstärke, noch die Dicke der Klebstoffschicht. In der Praxis treten jedoch geringe und teilweise sogar starke oder sehr starke Dehnungen auf. Üblicherweise wird sogar bei einer linearen Dehnung einer Folie mit einer Folienstärke (immer angegeben ohne die Dicke der Klebstoffschicht) von z.B. 55 µm um 20 % auf etwa 46 µm Stärke und bei einer Klebstoffstärke von ursprünglich z.B. 10 µm auf etwa 8 µm eine ausreichende Abdichtung der Randzone erreicht. Vom Rand zum Zentrum des aufzubringenden Folienabschnitts wird durch eine Verformung unterhalb der Reißdehnungsgrenze die Klebstoffstärke entsprechend reduziert, was jedoch nicht von gravierender Bedeutung ist, da hier weder mit Luftzutritt, noch mit Feuchtigkeitszutritt zu rechnen ist, solange die Folie in dieser Partie nicht durchtrennt oder beschädigt wird.

Es wurde festgestellt, daß lineare Dehnungen bis zu 200 % oft problemlos genutzt werden können, solange weder die Dehngrenze der Folie erreicht wird, noch die Dicke der Klebstoffschicht eine unzureichende Haftung und eine mangelnde Abdichtung der unebenen Oberfläche ergibt. Zur Absicherung der Mindest-Folienstärke von z.B. 40 µm im gedehnten Zustand ist bei einer erforderlichen Dehnung bis zu 100 % eine Ausgangsfolienstärke von 80 µm erforderlich. Ein derartige, gut geeignete Folie ist z.B. unter der Bezeichnung 410 Autowrap verfügbar.

Wenn jedoch die Folie eine Randzone eines Formkörpers abdecken soll und dabei auch kleine Krümmungsradien der Folie entstehen sollen, kann es passieren, daß bereits bei einer Dehnung von mehr als 50 % die Dicke der Klebstoffschicht nicht mehr ausreichend ist, um Unebenheiten der Formkörperoberfläche auszugleichen. Dann können auch Ablösungen der Folie auftreten. Dem kann Rechnung getragen werden, indem die Überstände breiter als 10 mm und die Dehnung der Folie möglichst gering im Randbereich der Formkörper gehalten wird.

Insbesondere bei thermoplastischen Folien ist zu beachten, daß bei zunehmender Temperatur die Zugfestigkeit der Folie stark abnimmt.

Die Versuche zeigten, daß geeignete Folien oft auch deswegen eine Mindest-Schälfestigkeit von 1,2 N pro 25 mm Breite des Teststreifens benötigen, damit verhindert wird, daß sich die Folien während des Transportes von der Fahrzeuglackoberfläche z.B. auch durch Gegenwind ablösen.

Voraussetzung für ein rißfreies Abschälen der Folie in einem Stück bei Raumtemperatur kann eine Zugfestigkeit von mindestens 5 N pro 25 mm, vorzugsweise von mindestens 6 N pro 25 mm, besonders bevorzugt von mindestens 7 N pro 25 mm sein. Eine solche Zugfestigkeit wird bei vielen der heute bekannten, hierfür einsetzbaren Folien oft erst bei einer Folienstärke von mindestens 30 µm, vorzugsweise von mindestens 40 µm, ganz besonders bevorzugt bei einer Folienstärke von mindestens 45 µm oder 50 µm erreicht.

Die aufzubringende Folie kann bei dem erfindungsgemäßen Verfahren je nach dem Formkörper unterschiedliche Aufgaben erfüllen: Sie kann den Formkörper temporär oder dauerhaft vor Korrosion oder/und Beschädigung schützen; sie kann ihn aber auch dekorieren z.B. um eine Farbgebung zu erreichen, das "natürliche" Aussehen einer z.B. metallischen Oberfläche zu erhalten oder z.B. durch Abdunkeln oder Tönen abzuwandeln oder/und um einen Schriftzug, einen Namensträger, eine Werbefläche, ein Ornament, eine einheitlich oder uneinheitlich gemusterte bzw. gefärbte oder eine andersartige Dekoration aufzubringen. Die Dekoration kann dann u.U. auch als Schutz vor Strahlung wie z.B. UV-Licht oder/und als Ersatz eines Lackes, einer Polymer bzw. Kunstharz enthaltenden Beschichtung, eines Korrosionsschutzmaterials oder/und einer metallischen Schutzschicht dienen.

Die temporär oder dauerhaft erfindungsgemäß beschichteten Formkörper können z.B. als Möbelelemente, Flächendekorationen z.B. für Räume oder Waggons, als Kunststoffstoßstangen und als andersartige Holz-, Kunststoff- und Metallteile für Fahrzeuge verwendet werden. Die temporär oder dauerhaft erfindungsgemäß beschichteten Formkörper können beispielsweise für den Anlagenbau, die Bauindustrie, den Fahrzeugbau, die Flugzeugindustrie, den Geräte- und Maschinenbau bzw. die Möbelindustrie verwendet werden.

### Beispiele

Für die Beispiele wurden gleichartige, stark gekrümmte rotationssymmetrische topf- und glockenähnliche Formkörper mit einer größeren kreisrunden Ausnehmung und mit einem Außendurchmesser von etwa 40 cm zusammen mit einem etwa gleich großen kreisförmigen Rahmen als Spanneinrichtung verwendet. Die Folie wurde auf Maß mit einem Überstand von mindestens 10 mm geschnitten und am Rahmen eben befestigt. Die Klebeschicht der Folie zeigte nach unten. Der Rahmen mit der Folie wurde nach unten auf den Formkörper zubewegt. Der Formkörper wurde mit der Klebeschicht der Folie kontaktiert, und der Rahmen mit der Folie wurde über den Formkörper gestülpt und heruntergezogen. Hierbei legte sich der Folienabschnitt von alleine an dem Formkörper an und mußte nur noch am unteren äußeren Rand angedrückt werden. Bei diesen ersten Versuchen wurde die Faltenfreiheit noch nicht ganz erreicht, da der Durchmesser des Rahmens nicht so angepaßt war, daß der Folienabschnitt auch bis zum Ende des unteren Randes glatt und faltenfrei angelegt werden konnte. Die Verformung der Folie war in der gekrümmten und oberen Partie der Folie sehr stark unterschiedlich und ergab eine Dehnung bis etwa 100 % (Abbn. 1 und 2).

### Erfindungsgemäßes Beispiel 1:

Erste Versuche des Überziehens stark gekrümmter Formkörper mit partiell mittels eines Heißluftföhns erwärmten, geeigneten, von der Anmelderin vertriebenen Folien wie z.B. 181 Autowrap oder 410 Autowrap (Hersteller: American Biltrite Inc.) ergaben bei Raumtemperatur faltenfreie Folienüberzüge (siehe Abb. 2), nachdem der Folienabschnitt in einem weiten mittleren Bereich auf etwa 15 bis 20 °C höhere Temperaturen als in der Randpartie des Folienabschnitts erhitzt worden war.

### Erfindungsgemäßes Beispiel 2:

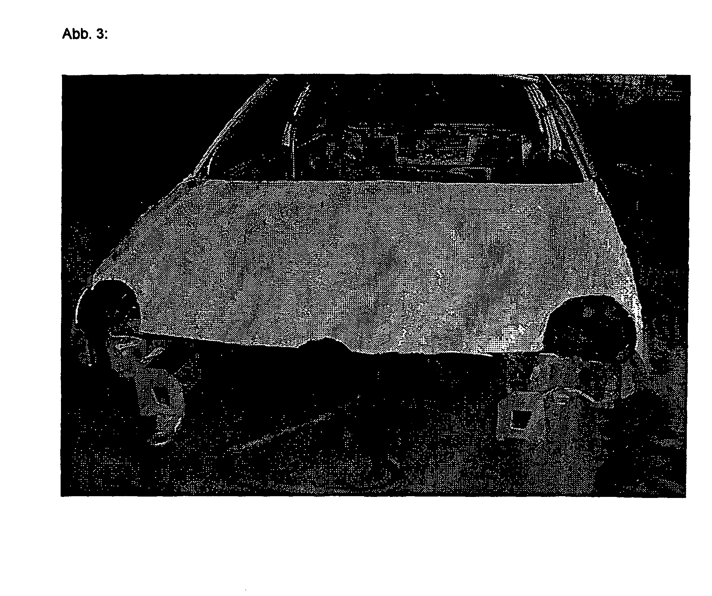

Es wurde ein konventioneller PKW verwendet, um seine Motorhaube und seine Kotflügel mit einer Klebefolie 181 Autowrap zu beschichten. Die Motorhaube und die Kotflügel wiesen im Vergleich zu anderen PKWs relativ starke Krümmungen auf, insbesondere im Bereich um die Kotflügel. Ein Folienabschnitt von 1,5 m mal 1,8 m wurde in einen Spannrahmen eingespannt und langsam über die Motorhaube und die Kotflügel gezogen. Als alle erhabenen Partien mit Folie in Kontakt gebracht waren, wurde die Folie mit einem beweglichen Filz als Rakel eingedrückt und an den Formkörper in den Vertiefungen angelegt. Unmittelbar danach wurde ein großes, leicht verformbares, der Formkörperoberfläche anpaßbares Heizkissen im Format 80 cm mal 50 cm, das eine Temperatur von etwa 80 °C aufwies, auf die auf dem Formkörper aufliegende Folie zuerst in einer stärker verformten und stärker gestreckten Partie der Folie aufgelegt. Das Eigengewicht des Heizkissens drückte mit einer Kraft von 12 kg/m² auf die Folie. Die Temperatur konnte über eine Minute einwirken. Dadurch wurden die Spannungen in der Folie abgebaut und ein Rückstellen von Falten und ein Abheben der Folie wurde vermieden. Außerdem wurde dadurch eine dauerhafte Adhäsionshaftung zwischen der Klebeschicht der Folie und der Formkörperoberfläche erzielt. Danach wurde das Heizkissen auf die nächsten, stärker verformten und verstreckten Partien der Folie für jeweils 1 Minute gelegt. Während dieser Behandlung erhitzten sich die Folie und der Formkörper von etwa 20 °C auf etwa 50 °C. Die Folie konnte faltenfrei aufgebracht werden und dauerhaft faltenfrei gehalten werden (siehe Abb. 3). Darüber hinaus ließ sich die Folie nach einem Freibewitterungstest in Frankfurt am Main über 3 Monate rißfrei in einem Stück von der Formkörperoberfläche abziehen. Hierbei blieb kein Klebstoffrest an der lackierten Oberfläche von Motorhaube und Kotflügeln visuell erkennbar kleben.

### Vergleichsbeispiel:

Bei der Verwendung einer Folienqualität mit stark unterschiedlichen Zugfestigkeiten in Längs- und Querrichtung entstanden regelmäßig starke Falten, die sich teilweise trotz Andrückens wieder aufstellten (siehe Abb. 1).

## Patentansprüche

1. Automatisiertes Verfahren zum faltenfreien oder weitestgehend faltenfreien Überziehen von regelmäßig oder unregelmäßig geformten bzw, gekrümmten Formkörpern mit einer Folie, insbesondere zum Überziehen von Teilen von Karosserien oder als Verpackungen mit einer Transportschutzfolie, **dadurch gekennzeichnet, daß** die Folie vor oder/und während des Überziehens des Formkörpers mit einem Folienabschnitt in mindestens einer Partie, die stärker verformt wird als die benachbarten Partien, selektiv erwärmt wird und daß die Partien der Folie um die Halterungen der Folie nicht oder geringer als in der stärker zu verformenden Partie erwärmt werden, so daß die verschiedenen Partien der Folie während des Verformens eine unterschiedliche Temperatur aufweisen.

2. Automatisiertes Verfahren zum faltenfreien oder weitestgehend faltenfreien Überziehen von regelmäßig oder unregelmäßig geformten bzw. gekrümmten Formkörpern mit einer Folie, insbesondere zum Überziehen von Teilen von Karosserien oder als Verpackungen mit einer Transportschutzfolie, **dadurch gekennzeichnet, daß** die Folie vor oder/und während des Überziehens des Formkörpers mit einem Folienabschnitt in Partien um die Halterungen der Folie selektiv gekühlt wird und daß die Folie in mindestens einer Partie, die stärker verformt wird als die benachbarten Partien, nicht oder weniger gekühlt wird als in Partien um die Halterungen, so daß die verschiedenen Partien der Folie während des Verformens eine unterschiedliche Temperatur aufweisen.

3. Automatisiertes Verfahren nach Anspruch 1 oder 2, **dadurch gekennzeichnet, daß** die Folie, ggf. als Folienabschnitt, gänzlich oder weitgehend plan, ggf. auch abgewinkelt oder/und gekrümmt gehalten wird.

4. Automatisiertes Verfahren nach mindestens einem der vorstehenden Ansprüche, **dadurch gekennzeichnet, daß** die Folie, ggf. als Folienabschnitt, in einer Spanneinrichtung, vorzugsweise einem Rahmen, gehalten wird.

5. Automatisiertes Verfahren nach mindestens einem der vorstehenden Ansprüche, **dadurch gekennzeichnet, daß** die Folie, ggf. als Folienabschnitt, zusammen mit der Spanneinrichtung oder/und der zu beschichtende Formkörper auf einander zubewegt werden, wobei der Formkörper mit der Folie kontaktiert wird, die Folie übergezogen wird, die Spanneinrichtung ein Stück seitlich außerhalb des Formkörpers vorbeigeführt wird und die Folie ggf. nachträglich am Rand abgeschnitten wird.

6. Automatisiertes Verfahren nach mindestens einem der vorstehenden Ansprüche, **dadurch gekennzeichnet, daß** die Folie, ggf. als Folienabschnitt, über dem zu beschichtenden Formkörper gespannt, über die ganze zu beschichtende Fläche gezogen, über dem Formkörper zumindest teilweise gedehnt und ggf. aufgeklebt wird.

7. Automatisiertes Verfahren nach mindestens einem der vorstehenden: Ansprüche, **dadurch gekennzeichnet, daß** die Folie zusätzlich mit einem bewegten Mittel wie z.B. einer Rolle, einer Walze, einer Bürste, einem Schaumstoffelement, einem Stempel, einem Kissen, einer Matte, einem Gewebe; einem Filz, einer flexiblen Platte, insbesondere einem Fluid, Pulver oder/und Granulat enthaltenden Kissen, einem flexiblen oder/und formtreuen Heiz- oder/und Kühlelement oder einem ähnlichen Element zum Andrücken auf die zu beschichtende Oberfläche, einem Rakel oder einer ähnlichen Quetschvorrichtung oder. mit Luftdruck an die Oberfläche des zu beschichtenden Formkörpers angedrückt wird, insbesondere im Bereich von Vertiefungen.

8. Automatisiertes Verfahren nach mindestens einem der vorstehenden Ansprüche, **dadurch gekennzeichnet, daß** die Folie mindestens auf 10 % der mit der Folie zu schützenden Fläche angelegt oder/und fast aufliegend überspannt wird, wobei die Folie mit einem bewegten Mittel nach Anspruch 7 gespannt bzw. angedrückt wird, bevor die Folie in bestimmten Partien stärker aufgewärmt oder stärker gekühlt wird.

9. Automatisiertes Verfahren nach mindestens einem der vorstehenden Ansprüche, **dadurch gekennzeichnet, daß** die Folie zumindest teilweise in Vertiefungen bzw. tiefere Partien des zu beschichtenden Formkörpers gedrückt bzw. zumindest teilweise auf der Oberfläche des Formkörpers angelegt wird oder/und über erhabene Partien des zu beschichtenden Formkörpers gespannt und zumindest teilweise auf der Oberfläche des Formkörpers angelegt wird, bevor die Folie in Partien mit größerer Zugspannung stärker erwärmt wird und bevor dadurch die größeren Zugspannungen in der Folie abgebaut werden.

10. Automatisiertes Verfahren nach mindestens einem der vorstehenden Ansprüche, **dadurch gekennzeichnet, daß** eine Oberfläche mindestens eines Formkörpers aus mindestens einem Material auf Basis Lack, Kunstharz, Polymer, Korrosionsschutzmaterial, Kunststoff, Holz oder/und Metall mit einer Folie überzogen wird.

11. Automatisiertes Verfahren nach mindestens einem der vorstehenden Ansprüche, **dadurch gekennzeichnet, daß** die zum Überziehen verwendete Folie vor der Dehnung eine Dicke im Bereich von 1 bis 200 µm aufweist.

12. Automatisiertes Verfahren nach mindestens einem der vorstehenden Ansprüche, **dadurch gekennzeichnet, daß** die Folie eine Klebstoffschicht trägt, die den Randspalt zwischen dem beklebten Formkörper und der Folie durch die Klebstoffschicht im wesentlichen oder gänzlich abdichten soll.

13. Automatisiertes Verfahren nach mindestens einem der vorstehenden Ansprüche, **dadurch gekennzeichnet, daß** die Temperatur der Folie in den verschiedenen Partien des Folienabschnitts näherungsweise proportional zu der Verformung eingestellt wird.

14. Automatisiertes Verfahren nach mindestens einem der vorstehenden Ansprüche, **dadurch gekennzeichnet, daß** die Temperaturunterschiede zwischen den stärker zu verformenden Partien der Folie zu den Partien besonders niedriger Temperatur der Folie - soweit es solche gibt, sonst zu den übrigen Partien niedriger Temperatur, im Bereich von 3 bis 100 °C liegen.

15. Automatisiertes Verfahren nach mindestens einem der vorstehenden Ansprüche, **dadurch gekennzeichnet, daß** eine Folie mit einer linearen Dehnung gemessen nach ASTM D882 von mindestens 300 % für das Überziehen des Formkörpers verwendet wird, insbesondere in allen Richtungen der Folienebene.

16. Automatisiertes Verfahren nach mindestens einem der vorstehenden Ansprüche, **dadurch gekennzeichnet, daß** eine Folie mit einer Zugfestigkeit gemessen nach ASTM D882 in Längsrichtung von mindestens 4 N pro 25 mm des Teststreifens für das Überziehen des Formkörpers verwendet wird.

17. Automatisiertes Verfahren nach mindestens einem der vorstehenden Ansprüche, **dadurch gekennzeichnet, daß** eine Folie mit einer Schälfestigkeit der Klebstoffschicht von mindestens 0,5 N pro 25 mm Breite des Teststreifens für das Überziehen des Formkörpers verwendet wird.

18. Automatisiertes Verfahren nach mindestens einem der vorstehenden Ansprüche, **dadurch gekennzeichnet, daß** auf der Folie. Klebstoff aufgebracht ist, vorzugsweise in einer Schichtdicke im Bereich von 1 bis 25 µm.

19. Automatisiertes Verfahren nach mindestens einem der vorstehenden Ansprüche, **dadurch gekennzeichnet, daß** eine Folie mit einer Schälfestigkeit auf Edelstahl #4 gemessen nach PSTC 2 mit einem Abziehwinkel von 90° von mindestens 1,0 N pro 25 mm Breite des Teststreifens für das Überziehen des Formkörpers verwendet wird.

20. Verwendung des Verfahrens gemäß den Ansprüchen 1 bis 19 zum Anbringen von Folienbeschichtungen als temporärer oder dauerhafter Schutz vor atmosphärischen, chemischen und mechanischen Beeinträchtigungen, als Transportschutz, als Schutz vor Strahlung wie z.B. UV-Licht, als Namensträger, als Werbefläche, als Dekoration, als Ersatz eine Lackes, einer Polymer bzw. Kunstharz enthaltenden Beschichtung, eines Korrosionsschutzmaterials oder/und einer metallischen Schutzschicht, zur Farbgebung, zur Abdunkelung, zur Tönung oder/und zur Strömungsoptimierung.

21. Verwendung des Verfahrens gemäß den Ansprüchen 1 bis 19 zum Anbringen von temporären oder dauerhaften Folienbeschichtungen für den Anlagenbau, die Bauindustrie, den Fahrzeugbau, die Flugzeugindustrie, den Geräte- und Maschinenbau bzw. die Möbelindustrie.

## Claims

1. An automated method for the crease-free or very largely crease-free covering of regularly or irregularly formed or curved shaped articles with a film, in particular for covering vehicle body parts or as packaging with a transport protection film, **characterised in that**, before and/or during covering of the shaped article with a film portion, the film is selectively heated in at least one part which is more highly deformed than the adjacent parts, and that the parts of the film around the holders for the film are not heated or are less heated than in the parts to be more highly deformed, so that the different parts of the film exhibit a different temperature during deformation.

2. An automated method for the crease-free or very largely crease-free covering of regularly or irregularly shaped or curved shaped articles with a film, in particular for covering vehicle body parts or as packaging with a transport protection film, **characterised in that**, before and/or during covering of the shaped article with a film portion, the film is selectively cooled in parts of the film around the holders for the film and that, in at least one part which is more highly deformed than the adjacent parts, the film is not cooled or is less cooled than in parts around the holders, so that the different parts of the film exhibit a different temperature during deformation.

3. An automated method according to claim 1 or 2, **characterised in that** the film, optionally as a film portion, is held entirely or largely flat, optionally also bent and/or curved.

4. An automated method according to at least one of the preceding claims, **characterised in that** the film, optionally as a film portion, is held in a clamping device, preferably a frame.

5. An automated method according to at least one of the preceding claims, **characterised in that** the film, optionally as a film portion, together with the clamping device and/or the shaped article to be coated are moved towards one another, wherein the shaped article is brought into contact with the film, the film is drawn over, the clamping device is passed by slightly to the side outside the shaped article and the film is optionally subsequently trimmed off at the edge.

6. An automated method according to at least one of the preceding claims, **characterised in that** the film, optionally as a film portion, is stretched over the shaped article to be coated, drawn over the entire face to be coated, at least in part extended over the shaped article and optionally adhesively bonded thereto.

7. An automated method according to at least one of the preceding claims **characterised in that** the film is additionally pressed down onto the surface of the shaped article to be coated, in particular in the area of indentations, with mobile means, such as for example a roll, a roller, a brush, a foam element, a punch, a cushion, a mat, a woven fabric, a felt, a flexible plate, in particular a cushion containing a fluid, powder and/or pellets, a flexible and/or shape-matching heating and/or cooling element or a similar element for pressing down onto the surface to be coated, a doctor blade or a similar squeegee device or with air pressure.

8. An automated method according to at least one of the preceding claims, **characterised in that** the film is laid on at least 10% of the area to be protected with the film and/or stretched thereover so it almost lies thereon, wherein the film is stretched or pressed down with mobile means according to claim 7 before certain parts of the film are more strongly heated or more strongly cooled.

9. An automated method according to at least one of the preceding claims, **characterised in that** the film is at least in part pressed into indentations or recessed parts of the shaped article to be coated or is at least in part laid on the surface of the shaped article and/or stretched over raised parts of the shaped article to be coated and at least in part laid on the surface of the shaped article before the film is more strongly heated in parts with greater tensile stress and before the greater tensile stresses are relieved in the film thereby.

10. An automated method according to at least one of the preceding claims, **characterised in that** a surface of at least one shaped article made from at least one material on the basis of lacquer, synthetic resin, polymer, corrosion protection material, plastics, wood and/or metal is covered with a film.

11. An automated method according to at least one of the preceding claims, **characterised in that**, prior to extension, the film used for covering has a thickness in the range from 1 to 200 µm.

12. An automated method according to at least one of the preceding claims, **characterised in that** the film bears an adhesive layer which is intended substantially or entirely to seal the marginal gap between the adhesively bonded shaped article and the film by the adhesive layer.

13. An automated method according to at least one of the preceding claims, **characterised in that** the temperature of the film in the various parts of the film portion is adjusted approximately proportionally to the degree of deformation.

14. An automated method according to at least one of the preceding claims, **characterised in that** the temperature differences between the parts of the film which are to be more highly deformed relative to the parts with a particularly low film temperature, in the event that there are such parts, or otherwise relative to the other low-temperature parts, are in the range from 3 to 100°C.

15. An automated method according to at least one of the preceding claims, **characterised in that** the film used for covering the shaped article is a film with a linear elongation, measured to ASTM D882, of at least 300%, in particular in all directions of the film plane.

16. An automated method according to at least one of the preceding claims, **characterised in that** the film used for covering the shaped article is a film with a tensile strength, measured to ASTM D882, in the longitudinal direction of at least 4 N per 25 mm of the test strip.

17. An automated method according to at least one of the preceding claims, **characterised in that** the film used for covering the shaped article is a film with a peel strength of the adhesive layer of at least 0.5 N per 25 mm of width of the test strip.

18. An automated method according to at least one of the preceding claims, **characterised in that** adhesive is applied onto the film, preferably to a layer thickness in the range from 1 to 25 µm.

19. An automated method according to at least one of the preceding claims, **characterised in that** the film used for covering the shaped article is a film with a peel strength on stainless steel #4, measured to PSTC 2 with a peel angle of 90°, of at least 1.0 N per 25 mm of width of the test strip.

20. Use of the method according to claims 1 to 19 for the application of film coatings as a temporary or permanent protection from atmospheric, chemical and mechanical damage, as transport protection, as radiation protection, for example from UV light, as a name substrate, as a promotional surface, as a decoration, as a replacement for a lacquer, a coating containing a polymer or synthetic resin, a corrosion protection material and/or a metallic protective layer, for imparting colour, for darkening, for shading and/or for optimising flow.

21. Use of the method according to claims 1 to 19 for the application of temporary or permanent film coatings for plant construction, the building industry, vehicle construction, the aircraft industry, appliance and machinery construction or the furniture industry.

## Revendications

1. Procédé automatisé pour revêtir sans plis ou dans une large mesure sans plis des corps façonnés aux formes régulières ou irrégulières voire courbes à l'aide d'un film, plus particulièrement pour recouvrir des pièces de carrosserie ou en tant qu'emballage formé d'un film de protection pour le transport, **caractérisé en ce qu'**avant et/ou pendant l'opération de revêtement du corps façonné à l'aide d'une portion de film, dans au moins une partie dans laquelle les déformations sont plus importantes que dans les parties voisines, le film est réchauffé de manière sélective et **en ce que** les parties du film autour des moyens de tenue dudit film ne sont pas ou sont moins fortement chauffées que la partie devant subir une plus grande déformation, de sorte que les différentes parties du film, pendant l'opération de mise en forme, présentent des températures différentes.

2. Procédé automatisé pour revêtir sans plis ou dans une large mesure sans plis des corps façonnés aux formes régulières ou irrégulières voire courbes à l'aide d'un film, plus particulièrement pour recouvrir des pièces de carrosserie ou en tant qu'emballage formé d'un film de protection pour le transport, **caractérisé en ce qu'**avant et/ou pendant l'opération de revêtement du corps façonné à l'aide d'une portion de film, dans les parties du film autour des moyens de tenue du film, le film est refroidi de manière sélective et **en ce que** dans au moins une partie devant subir une déformation plus grande que les parties voisines, le film n'est pas ou est plus faiblement refroidi que dans les parties autour des moyens de fixation, de sorte que les différentes parties du film, pendant l'opération de mise en forme, présentent des températures différentes.

3. Procédé automatisé selon la revendication 1 ou 2, **caractérisé en ce que** le film, ou la portion de film, est entièrement plan ou dans une large mesure plan, le cas échéant est également tenu plié ou/et incurvé.

4. Procédé automatisé selon au moins une des revendications précédentes, **caractérisé en ce que** le film, ou la portion de film, est tenu dans un dispositif de tension, de préférence dans un cadre.

5. Procédé automatisé selon au moins une des revendications précédentes, **caractérisé en ce que** le film, ou la portion de film avec le dispositif de tension ou/et le corps façonné à revêtir sont déplacés en direction l'un de l'autre, le corps façonné étant amené en contact avec le film, le film étant déployé sur le corps, le dispositif de tension étant déplacé faiblement sur le côté en dehors du corps façonné et le film étant le cas échéant recoupé sur le bord.

6. Procédé automatisé selon au moins une des revendications précédentes, **caractérisé en ce que** le film ou la portion de film est tendu au-dessus du corps façonné à revêtir, est déployé sur la totalité de la surface à revêtir, est au moins partiellement étiré sur le corps façonné et le cas échéant est collé.

7. Procédé automatisé selon au moins une des revendications précédentes, **caractérisé en ce qu'**en outre le film est pressé contre la surface du corps façonné à revêtir, plus particulièrement dans la région des dépressions, à l'aide d'un moyen que l'on déplace tel que par exemple un galet, un cylindre, une brosse, un élément en un produit alvéolaire, une étampe, un coussin, un tapis, une toile, un feutre, une plaque flexible, plus particulièrement un coussin contenant un fluide, de la poudre ou/et des granulés, un élément chauffant ou/et réfrigérant flexible ou/et de forme adaptée ou un élément similaire pour le placage sur la surface à revêtir, une racle ou un dispositif de placage similaire, ou à l'aide d'air comprimé.

8. Procédé automatisé selon au moins une des revendications précédentes, **caractérisé en ce que** le film est appliqué sur au moins 10% de la surface à protéger à l'aide du film ou/est tendu presque en contact au-dessus de celle-ci, le film étant tendu et plaqué à l'aide d'un moyen déplaçable selon la revendication 7 avant d'être plus fortement chauffé ou plus fortement refroidi dans certaines parties.

9. Procédé automatisé selon au moins une des revendications précédentes, **caractérisé en ce que** le film est au moins partiellement plaqué dans les dépressions ou les parties plus profondes du corps façonné à revêtir, voire est au moins partiellement appliqué sur la surface du corps façonné ou/et est tendu sur les parties en relief du corps façonné à revêtir et est appliqué au moins partiellement sur la surface du corps façonné avant que le film soit plus fortement chauffé dans les parties où la tension est plus élevée et avant que les tensions plus élevées dans le film soient relaxées.

10. Procédé automatisé selon au moins une des revendications précédentes, **caractérisé en ce qu'**une surface d'au moins un corps façonné est formée d'au moins un matériau à base de peinture, de résine synthétique, de polymère, d'un produit de protection contre la corrosion, de matière plastique, de bois ou/et de métal est revêtue d'un film.

11. Procédé automatisé selon au moins une des revendications précédentes, **caractérisé en ce que** le film utilisé pour le revêtement, avant étirement, présente une épaisseur comprise entre 1 et 200 µm.

12. Procédé automatisé selon au moins une des revendications précédentes, **caractérisé en ce que** le film porte une couche d'adhésif destinée à fermer de manière étanche pour une grande part ou en totalité l'espace périphérique entre le film et le corps façonné revêtu.

13. Procédé automatisé selon au moins une des revendications précédentes, **caractérisé en ce que** la température du film dans les différentes parties de la portion de film est réglée approximativement en fonction de la déformation.

14. Procédé automatisé selon au moins une des revendications précédentes, **caractérisé en ce que** les différences de température entre les parties du film devant subir une déformation plus importante et les parties du film à une température particulièrement basse ― dans la mesure où de telles parties existent, dans le cas contraire les autres parties à une température moins élevée ― sont comprises dans une plage allant de 3 à 100 °C.

15. Procédé automatisé selon au moins une des revendications précédentes, **caractérisé en ce qu'**on utilise pour le revêtement du corps façonné, un film présentant un allongement linéaire mesuré selon ASTM D882 d'au moins 300%, plus particulièrement dans toutes les directions.

16. Procédé automatisé selon au moins une des revendications précédentes, **caractérisé en ce qu'**on utilise pour le revêtement du corps façonné, un film présentant une résistance à la traction dans la direction longitudinale mesurée selon ASTM D882 d'au moins 4 N pour 25 mm de bande échantillon.

17. Procédé automatisé selon au moins une des revendications précédentes, **caractérisé en ce qu'**on utilise pour le revêtement du corps façonné, un film présentant une résistance au pelage de la couche d'adhésif d'au moins 0,5 N pour 25 mm de largeur de la bande échantillon.

18. Procédé automatisé selon au moins une des revendications précédentes, **caractérisé en ce qu'**un adhésif est appliqué sur le film, de préférence en une épaisseur comprise dans une plage allant de 1 à 25 µm.

19. Procédé automatisé selon au moins une des revendications précédentes, **caractérisé en ce qu'**on utilise pour le revêtement du corps façonné, un film présentant une résistance au pelage sur de l'acier fin #4 mesurée selon PSTC 2 sous un angle de traction de 90°, d'au moins 10 N pour 25 mm de largeur de la bande échantillon.

20. Utilisation du procédé automatisé selon les revendications 1 à 19 pour appliquer des revêtements sous forme de films, en tant que protection temporaire ou permanente contre les agressions atmosphériques, chimiques et mécaniques, en tant que protection contre les rayonnements comme par exemple le rayonnement UV, en tant que support de nom, surface publicitaire, décoration, comme substitut d'une laque, d'un revêtement contenant un polymère ou une résine synthétique, d'un produit anti-corrosion ou/et d'une couche métallique de protection, pour donner une couleur, obscurcir, teinter ou/et optimiser l'écoulement.

21. Utilisation du procédé automatisé selon les revendications 1 à 19 pour appliquer des revêtements sous forme de films dans la construction d'installations, dans l'industrie du bâtiment et des travaux publics, la construction automobile, l'industrie aéronautique, la construction mécanique ou l'industrie du meuble.
